# EUROPEAN PATENT SPECIFICATION

(11) **EP 3 649 849 B1**
(45) Date of publication and mention of the grant of the patent: **21.07.2021**
(21) Application number: 19000513.2
(22) Date of filing: 11.11.2019
(51) Int. Cl.: A01G 31/02, A01G 31/06

(54) **MODULAR AEROPONIC SYSTEM FOR CULTIVATING, TRANSPORTING AND EXPOSING PLANT PRODUCTS**
MODULARES AEROPONISCHES SYSTEM ZUM KULTIVIEREN, TRANSPORTIEREN UND BELICHTEN VON PFLANZENPRODUKTEN
SYSTÈME AÉROPONIQUE MODULAIRE POUR LA CULTURE, LE TRANSPORT ET L'EXPOSITION DE PRODUITS VÉGÉTAUX

(30) Priority: 12.11.2018 IT 201800010260
(43) Date of publication of application: 13.05.2020
(73) Proprietor: Agricooltur S.r.l., 10041 Carignano (TO) (IT)
(72) Inventor: Divia', Bartolomeo Marco Giusto, 10040 Osasio (TO) (IT); Boniforte, Alessandro, 10095 Grugliasco (TO) (IT); Baglione, Giulia, 10046 Poirino (TO) (IT); Ferrero, Stefano, 10040 Osasio (TO) (IT); Tosco, Valentino, 10022 Carmagnola (TO) (IT)
(74) Representative: Cian, Paolo

(56) References cited:
- EP-A1- 0 937 385
- EP-A1- 3 005 866
- WO-A1-2018/190097
- CA-A1- 2 892 131
- US-A1- 2008 229 661
- US-A1- 2009 126 269
- US-A1- 2012 085 026
- US-A1- 2016 165 821

## Description

The present invention refers in general to the field of production of vegetable products, for example of horticultural products such as vegetables to be eaten fresh and aromatic herbs or other varieties of plants, by soilless cultivation techniques, as well as to the distribution of said vegetable products aimed at the sale.

More particularly, the invention concerns an aeroponic system for the modular cultivation and transportation of plant products according to the appended claims.

Currently, vegetable products are produced and collected in a localized environment with a considerable use of labour to collect and package the products in view of their distribution to the points of sale.
Upon collection, the roots of the horticultural products are removed, whereby these products are no longer able to absorb water to continue in the stage of growth and to allow their tissues to remain alive, with the consequence that, from the time of their collection at the production site, a deterioration step of such products starts. Therefore, these products frequently arrive to the user or to the consumer already degraded or in any case greatly dehydrated, which can entail negative effects on the possibility to be sold. Moreover, in the case of horticultural products, their organoleptic and nutritive characteristics progressively deteriorate from the time of the collection, since removal of their roots triggers decay phenomena of the substances which they contain.

The present invention starts from the idea that a cultivation system that is able to allow to pick up a vegetable product from the production site, as well as to transportate it and to expose it for the sale with its root system intact, so as to maintain alive the plant, would allow the final user to have available a product in which the step of decline subsequent to collection is not yet started, so that the vital qualities and the possible organoleptical and nutritive properties thereof remain unchanged. The end user can therefore decide whether it is time to perform the step of collection by removing the root system of the plant, so as to keep an optimum quality of the vegetable product for a relatively long time. This would also considerably limit the waste resulting from deterioration of the vegetable products.

The so-called "aeroponic" cultivation technique is particularly suitable for cultivation and transportation of vegetable products for sale to a final consumer. In fact, this known technique allows plants to be fed by nebulization means for nebulizing water enriched with mineral fertilizers, which is directly sprayed on the root system of the plants to obtain the growth of the plants in a localized environment without using soil or other granular support materials. Also, exposure of the plants to pests and pathogenic agents is substantially eliminated, and the oxygenation level of the root system of the plants is improved, which favour their development. Differently from the known "hydroponic" cultivation technique, in which the root system of the plants is immersed in water and nutrients, the "aeroponic" cultivation technique takes advantage of the impact of the air on the plant roots to improve their development and to allow at the same time saving of water and nutrients, because their amount not absorbed directly by the roots can be recovered to be entered again in circulation in the system.

From US 2012/0085026 A1 is known an aeroponic system for cultivating plants or vegetable products, of the type defined above. This known system comprises a series of containers which may include more container units arranged at different heights, the containers of each unit having the bottom located at the same level. Each container houses inside it a nebulizer unit for nebulizing a nutritional fluid to the roots of the plants, the various containers of the system being connected with a first hydraulic line connected to the delivery side of a pump, which connects in series the containers of each container unit. The suction side of the pump is connected to a tank for collecting the nutritional fluid, which is placed at a lower level and is separated with respect to all the containers of the series, by means of an auxiliary hydraulic line connected to the bottom of all the containers of such a series of containers. In the case in which more systems of this type are arranged side by side, a pump for each series of containers is used, as well as a plurality of first nebulization lines and more auxiliary hydraulic lines, which are independent for each series of containers. In conclusion, the known system considered above is excessively complex and therefore expensive to be manufactured.

The object of the present invention is to propose a modular aeroponic system for cultivating, transporting and exposing vegetable products, having a particularly simple structure provided with a relatively small number of components and that allows a reduced amount of nutritional fluid to be used with respect to the aeroponic systems known up to now.

This object is achieved by virtue of the fact that the plurality of containers of the system comprises a main container and a series of secondary containers, the bottom of all said secondary containers being arranged at a higher level with respect to the bottom of the main container, said auxiliary hydraulic line being connected only to the bottom of the main container, and said second hydraulic line connecting with each other the bottom of all said containers.

By virtue of these features, the system according to the invention comprises particularly simple hydraulic lines, with the benefit of reducing the manufacturing costs, which also allows separation of the various containers to be made easily in order to transportation them for the exposure in a point of sale of the vegetable products, and to reconnect them equally easily at the point of sale to keep the vegetable products alive up to the time of their pick-up by a final user. Moreover, by virtue of the fact that the bottom of the secondary containers is at a higher level with respect to the bottom of the main container, and of the fact that the bottom of all the containers is connected by the secondary hydraulic line, the main container performs the function of a collection tank for the nutritional liquid, without any need to provide a separate collection tank, the level of nutritional liquid in the secondary tanks being substantially zero, so that the system requires a minimum amount of nutritional fluid, which allows the water and the amount of the nutritional substances used by the system to be considerably saved.

By virtue of these features, the cultivation system of the invention allows the transportability of the various modules, typically from the cultivation site to the exposure and sale site of the vegetable products, to be made easier, which enables such products to remain in the vegetative phase even during the transportation and exposure steps. In this manner, the collection step of such products is postponed to the maximum, since it takes place only by the end user after purchase.

According to a preferred feature of the invention, the system of the invention comprises a hydraulic washing circuit that includes a third hydraulic line connected to each of said containers and selectively connectable to the delivery side of the pump.

In this manner, at the end of a cultivation, transportation and exposure/sale cycle of the vegetable products, the containers of the system can be washed in a simple and practical manner to be prepared for a new operating cycle.

According to another preferred feature of the invention, the system comprises ozonization means to ozonize said nutritional fluid, which means are connected to the inside of the main container.

In this manner, it is possible to oxygenate at will the nutritional fluid, to improve the stage of growth of the vegetable products.

According to yet another preferred feature of the invention, the system comprises artificial lighting means arranged above said vegetable products and associated with each of said containers.

This allows the growth of the vegetable products to be optimized in conditions of absence or shortage of natural lighting, even during the steps of transportation and exposure for sale of the vegetable products.

According to further preferred features of the invention, a first on-off valve is interposed between the delivery side of said pump and said first hydraulic line, and a second on-off valve is interposed between the delivery side of said pump and said third hydraulic line.

Moreover, when said first and second on-off valves consist of solenoid valves, the operation of said pump and/or of the first and second on-off valves is managed automatically by electronic control means, which allows the pump and/or the first and the second on-off valves to be driven in an optimal manner. The same electronic control means are also susceptible to automatically actuate the ozonization means and/or the artificial lighting means of the system.

Further characteristics and advantages of the invention will become more clear from the following detailed description, provided purely by way of a non limiting example and referred to the attached drawings in which:
Figure 1 is a schematic perspective view of a first embodiment of the system of the invention, which comprises a main container and a plurality of secondary containers, which containers are arranged on a same support plane,
Figure 2 is a schematic exploded view of the main elements of a container of the system of the invention, as well as of support means for supporting vegetable products associated with each container,
Figure 3 is a perspective view showing a horticultural product, a respective pot that can be associated with a upper cover of a container of the system of the invention, and a cup container that can be connected to the pot when it is removed from the respective container at the time of sale of the horticultural product,
Figure 4 is a schematic side elevation view of a linear series of containers of the system of the invention,
Figure 5 is a schematic top elevational view of the series of containers of the system shown in Figure 4, from the side of arrow V of this Figure,
Figure 6 is an enlarged view similar to Figure 4, which shows in a greater detail a series of containers of the system of the invention,
Figure 7 is a schematic view similar to Figure 6, showing the level of a nutritional fluid in the vicinity of the bottom of the various containers of the system of the invention,
Figure 8 shows schematically a diagram of the operation of the system of the invention managed by programmable electronic control means,
Figure 9 is a schematic perspective view of a second embodiment of the system of the invention in which a container is positioned superimposed to another, and
Figure 10 schematically shows a diagram of the operation of the second embodiment of the system according to the invention, which comprises a series of overhead containers, and is managed by programmable electronic control means.

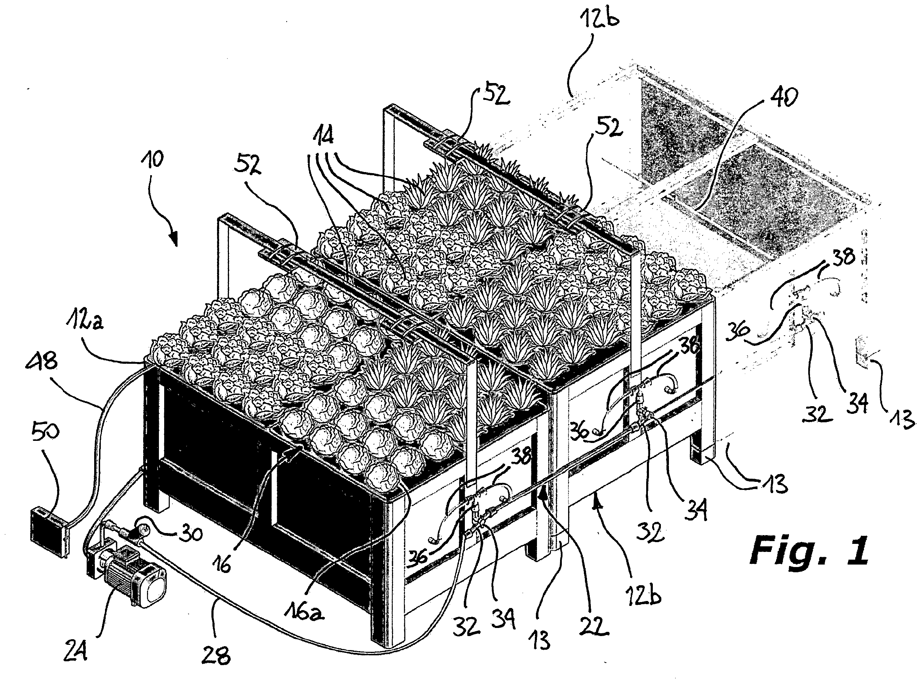

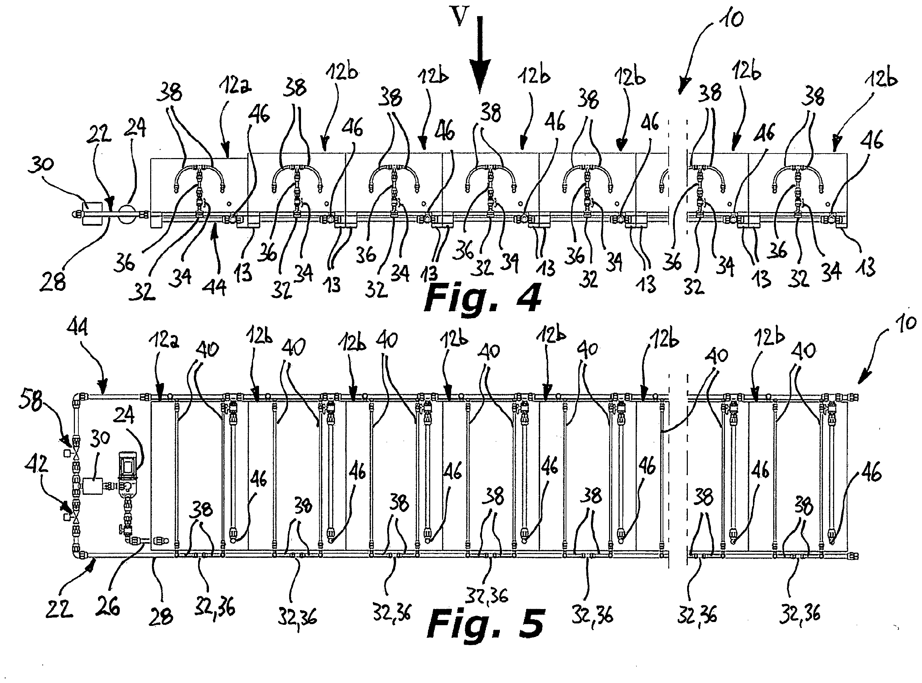

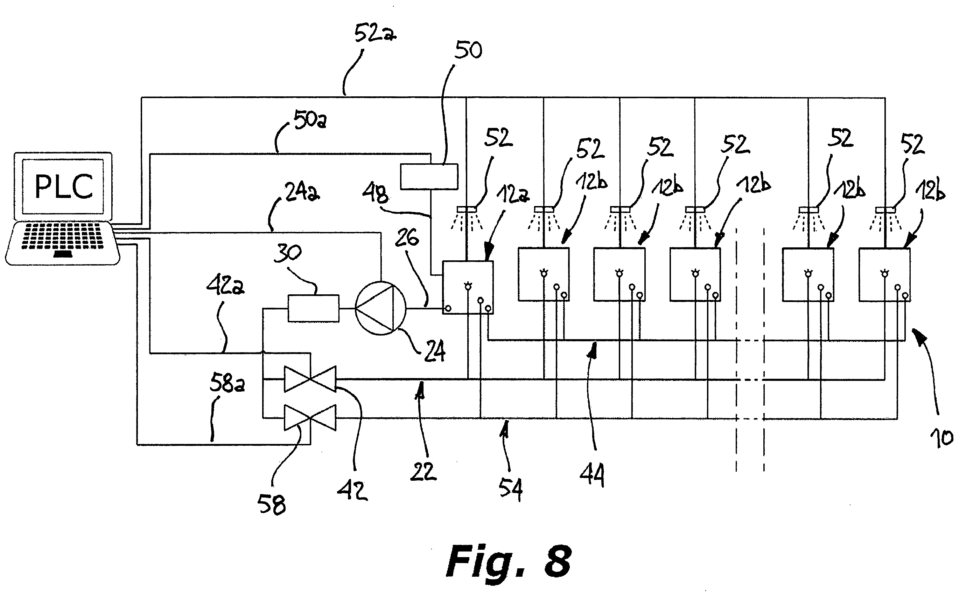

With initial reference to Figures 1 to 8, a modular aeroponic system according to the invention for cultivating, transporting and exposing vegetable products, is indicated by reference sign 10.
The system 10 includes a series of containers arranged side by side, which can be arranged according to a linear configuration shown in Figures 1, 4, 7 and 8 or in a flat configuration that extends in the two spatial directions so as to be arranged side by side both longitudinally and transversely. Each of such containers, which are generally indicated by the numeral reference 12, consists of a separable and transportable module of the system 10, which allows a plurality of vegetable products or plants 14 to be cultivated.
The various container modules 12 have a generally box shape open at the top and are substantially closed by means of a removable upper cover 16 having a plurality of circular openings 18, for example forty-eight of these openings with reference to the figures. Each opening 18 is intended to removably receive a respective pot 20. Conveniently, each cover 16 is divided into four separable sections 16a, which can be removed independently from the respective container 12.

Each of the pots 20 has perforated side surface and bottom, in order to constitute a support of the roots system of the plant 14 during its vegetative development, and it allows at the same time its roots to communicate with the inside of the respective container 12.

In particular, the system 10 comprises a main container indicated 12a, and a series of secondary containers 12b, for example arranged so as to rest on the soil according to a linear series. The bottom of all the secondary containers 12b is located at a higher level with respect to the bottom of the main container 12a, for the purpose which will be explained in the following of the description.

A first hydraulic line, indicated 22 as a whole, is associated with the series of containers 12a, 12b for the purpose of nebulizing a nutritional fluid containing water and nutrients inside all the containers 12a, 12b, by means of which the plants 14 are fed through their roots. The hydraulic line 22 is associated with a pump 24, typically electrically controlled, the suction side of which is connected to an auxiliary hydraulic line 26 connected only to the bottom of the main container 12a.

The delivery side of the pump 24 is connected to all the containers 12a, 12b via a further duct 28 in which a filter element 30 is interposed. In particular, the duct 28 is connected with all the containers 12a, 12b by respective T-shaped fittings 32 with which respective manually operable plug valves 34 are associated. A vertical duct 36 extends from each T-shaped fitting 32, which is connected to two curved branches 38 in turn connected to respective parallel linear ducts 40 that extend inside the containers 12a, 12b between a pair of opposite side walls of each container, each of these ducts 40 being provided with a series of nebulization nozzles not shown in detail being of a type known per se.

A first on-off valve 42 is interposed between the delivery side of the pump 24 and the first hydraulic line 22, to connect selectively the pump 24 to the first hydraulic line 22, the valve 42 being conveniently constituted by a solenoid valve.

Also, a second hydraulic draining line 44, which is separated from the first hydraulic line 22, is associated with the series of containers 12a, 12b to connect the bottom of all the containers 12a, 12b by respective elbow fittings 46.

According to the invention, the bottom of all the secondary containers 12b is arranged at a higher level with respect to the bottom of the main container 12a. For this purpose, spacer elements 13 are used, which are arranged below the supporting feet of the secondary containers 12b for raising the latter. Although the spacer elements 13 can be constituted by blocks of predetermined height, as shown by way of example in the figures, they are preferably of the type adjustable in height and include, for example, screw rest members provided with a threaded shank engaging a nut screw (not shown) connected to the bottom of the respective container 12b. In this manner, the level of the bottom of the secondary containers 12b can be changed with respect to the level of the bottom of the main container 12a for the purpose that will be clarified in the following of the description. The spacer elements 13 of the adjustable type can be conveniently incorporated in the various support feet of the secondary containers 12b.

Moreover, a duct 48 is connected to the main container 12a only, to connect the inside thereof to an ozonizer device 50 in order to oxygenate, when this is necessary, the nutritional fluid in this main container 12a. The device 50 usually includes its own pump for supplying oxygen to the main tank 12a.

Preferably, artificial lighting means are associated with the various containers 12a, 12b, which are arranged above the plants 14 and comprise one or more lamps 52 for each container, with the aim of integrating or replacing natural lighting, in order to optimize the stage of growth of the plants 14.

Furthermore, the system 10 is provided with a hydraulic washing circuit for washing the containers 12a, 12b, which consist of a third hydraulic line indicated 54 in the Figures. This hydraulic line 54 is connected to each container 12a, 12b at a hole 56 formed in a side wall thereof, preferably the side wall opposite to that adjacent to the vertical ducts 36 of the first hydraulic line 22. This washing circuit can be connected selectively to the delivery side of the pump 24 by a second on-off valve 58, conveniently consisting of a solenoid valve, which is interposed between the third hydraulic line 54 and the delivery side of the pump 24.

Preferably, the two on-off valves 42 and 58 are driven electrically by a programmable electronic control unit of the PLC type, in such a manner that when the valve 42 is open, during the normal operation of the first hydraulic nebulization line 22, the valve 58 connected to the third hydraulic washing line 44 is closed. Vice versa, when the third hydraulic washing line 44 is active for washing the bottom of the containers 12a and 12b before a new cycle of growth of the plants 14, the valve 42 of the first hydraulic nebulization line 22 is closed. To this purpose, the pump 24 and the valves 42 and 58 are connected to the electronic control unit PLC via respective conductor cables 24a, 42a and 58a.

Moreover, the ozonizer device 50 as well as the lamps 52 of the lighting means are preferably connected to the same electronic control unit PLC by a conductor cable 50a and by an electric line 52a, respectively.

Furthermore, sensor means (not shown in detail in the figures) for measuring the lighting or the ambient light as well as for measuring the amount of oxygen in the nutritional fluid can be conveniently provided, which are connected to the electronic control unit PLC to control automatically the activation of the lighting means 52 and of the ozonizer device 50, when this is necessary.

Also, sensor means for sensing the temperature and the humidity inside the containers 12a and 12b may be provided, which are also connected to the control electronic unit PLC to monitor the environmental conditions which the roots of the plants 14 are subjected to, in order to intervene in the operation of the pump 24 and/or to activate heating elements (not shown) for heating the nutritional fluid when this is necessary, so as to maintain the optimum conditions of cultivation and growth of the plants 14.

In the operation of the system 10, at the beginning of a cycle of cultivation of the plants 14 associated with the containers 12a, 12b, the valve 58 is open while the valve 42 is in the closed condition. Water is then fed inside the main container 12a to a preselected level, to start a washing step of the system 10. In this condition, the third hydraulic line 44 of the washing circuit is in the active condition, while the first hydraulic line 22 of the nebulization circuit is inactive. By operating the pump 24, the water in the container 12a is taken from the latter by the pump 24 through the duct 26, and it is sent to all the secondary containers 12b, in addition to the same main container 12a. Owing to the principle of the communicating vessels, all the containers 12a and 12b are connected to each other by means of the second hydraulic draining line 44, and the water is present in them at the same level.

At the end of the initial washing step, the pump 24 is temporarily deactivated and the washing water in the container 12a is discharged to the outside of the system 10, and with it the water in the secondary containers 12b.

After closing the valve 58 and opening the valve 42, as well as after having poured inside the main container 12a a predetermined amount of nutritional fluid composed of water and nutritional substances, the pump 24 is actuated again to start the nebulization step through the first hydraulic line 22 during the stage of growth of the plants 14. In the meantime, the plants 14 have been inserted with their pots 20 into the openings of the covers 16 of the containers 12a, 12b. In this condition, the roots of the plants 14 can absorb the nutrients necessary for their growth, from the inside of the respective containers 12a, 12b.

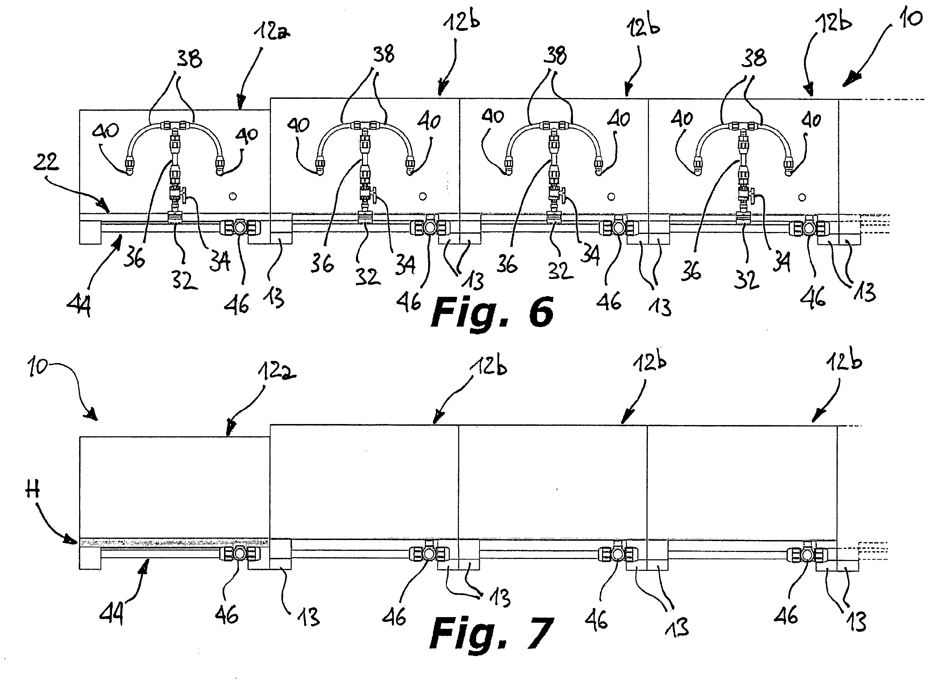

By virtue of the presence of the spacer elements 13 which allow the secondary containers 12b to be raised, the amount of nutritional fluid fed inside the main container 12a is dosed in such a manner that its level (indicated H in Figure 7) is substantially equal to the thickness of the spacer elements 13. In this manner, on the bottom of the container 12a there will be always this level of nutritional fluid, whereas in all the other secondary containers 12b, owing to the principle of communicating vessels and to the second hydraulic draining line 44, a substantially zero level of such a fluid there will be. This feature is important to ensure a minimum water and nutritive substance consumption by the system 10, and it is of considerable importance for the use of the system of the invention in places where there is little water.

The spacer elements 13, if they are of the type adjustable in height, allow the request of nutritional fluid by the system 10 to be adapted to the number of containers 12a, 12b. In fact, the demand for the nutritional fluid to be nebulized inside the various containers of the system 10 is proportional to the number of secondary containers 12b, which can vary with the need, and hence the volume of nutritional fluid in the main container 12a is also variable as a function of the number of secondary containers 12b. Therefore, the greater will be the number of secondary containers 12b, the higher the level of nutritional fluid in the main container 12. Consequently, to make the level of nutritional fluid null in the secondary containers 12b, the bottom of the latter need to be placed at a level at least equal to that of the nutritional fluid in the container 12a, which will be obtained by adjusting the height of the spacer elements 13.

At the end of the stage of growth of the plants 14, the various containers 12a, 12b of the system 10 can be taken from the site of cultivation and transported, for example by means of a truck or the like, in an exposure site such as a supermarket department, where the vegetable products 14 can be sold individually.

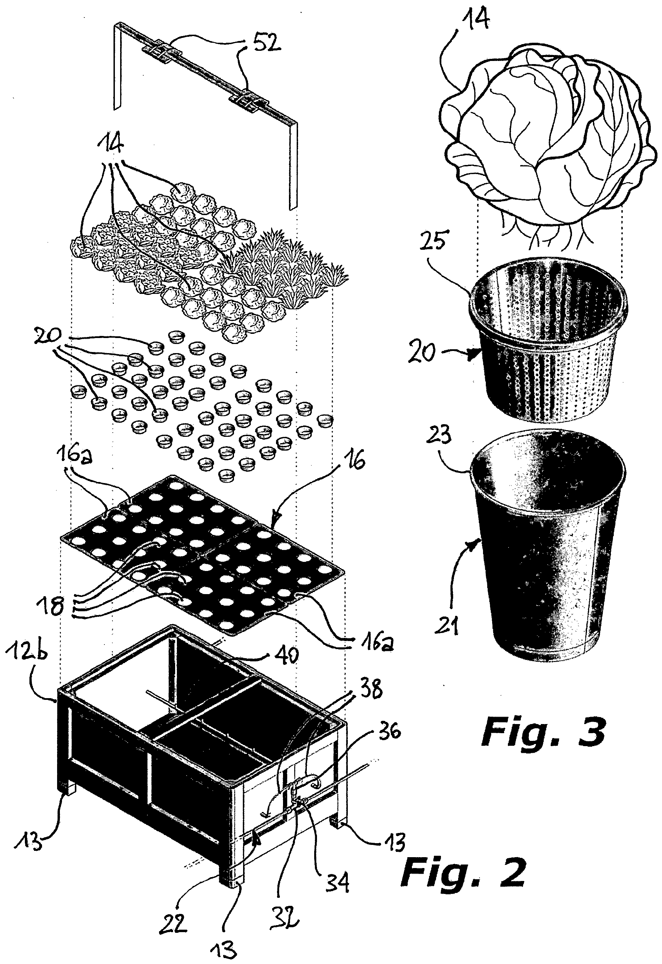

The final consumer can extract a selected horticultural product 14 from the cover 16 of a container 12a, 12b placed in the exposure site, and insert the pot 20 in a support cup 21 (see Figure 3) for the subsequent transportation to the place of use, without any risks of damaging the roots of the plant 14. In particular, the support cup 21 has a radially projecting upper edge 23 designed to be snap engaged in a hollow upper edge of the pot 20 by small projections (not shown) formed inside this upper edge of the pot 20, in order to snap engage the pot 20 in the support cup 21 to retain the pot 20 engaged with the respective support cup 21.

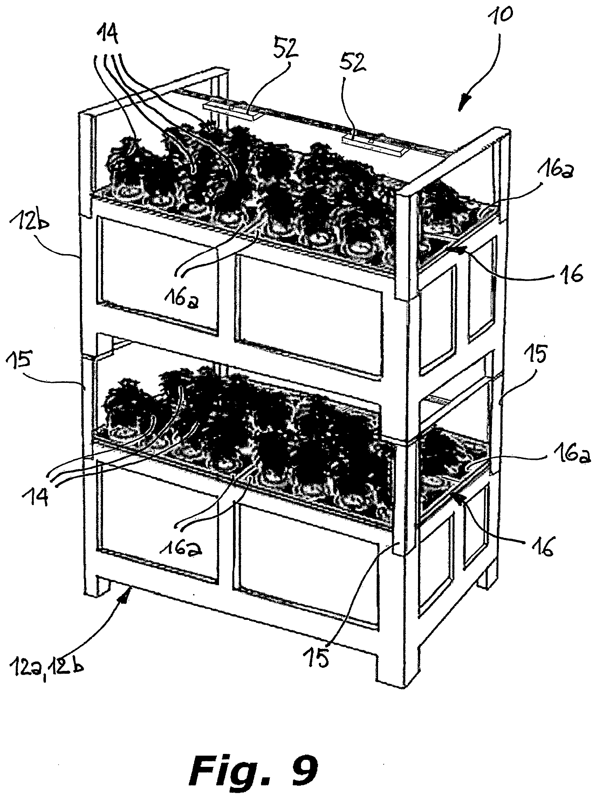

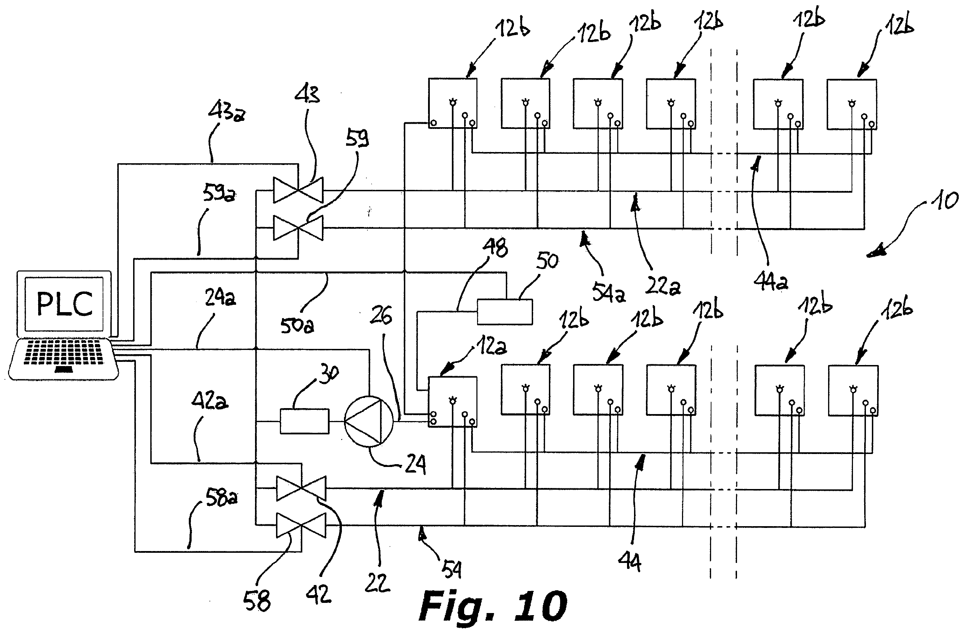

According to another embodiment of the invention, in which the parts not explicitly described hereinafter are identical or similar to those of the previous embodiment, and with reference to the Figures 9 and 10, the system of the invention can comprise supporting uprights 15 so as to allow one or more secondary containers 12b to be overlapped on a container 12a or 12b arranged below. In this manner it is possible to have two or more series of overhead containers.

In this case, the entire system 10 thus obtained still has the characteristics described above with reference to the first embodiment, and in particular comprises a single pump 24 connected to a first hydraulic nebulization line 22 associated with the series of lower containers 12a, 12b, as well as an additional first hydraulic nebulization line 22a associated with each series of overhead containers 12b, the latter being of the same type as the secondary containers 12b of the lower series of containers.

Both the hydraulic lines 22 and 22a of nebulization are then connected to the delivery side of the pump 24, an on-off valve 43 being interposed between the delivery side of the pump 24 and the additional hydraulic line 22a, to allow the additional hydraulic line 22a to be connected selectively with the pump 24.

Furthermore, a second supplementary hydraulic draining line 44a is associated with the secondary containers 12b of the overhead series, which connects the bottom of all the overhead containers 12b, as well as an additional third hydraulic washing line 54a. Another on-off valve 59 is associated with the additional third hydraulic washing line 54a, which is interposed between such additional hydraulic line 54a and the delivery side of the pump 24, in order to allow this additional hydraulic line 54a to be selectively connected to the pump 24.

Conveniently, the valves 43 and 59 consist of solenoid valves, in order to allow to be controlled automatically by means of the programmable electronic control unit PLC.

The operation of the system according to this embodiment of the invention is similar to that described above for the first embodiment, except for the fact that the electronic control unit PLC is also connected to the valves 43 and 59 via respective conductor cables 43a, 59a, in order to allow the operation of the first and of the third supplementary line 22a and 54a to be controlled.

Although in Figure 10 the lighting means of the various containers are not shown for the sake of simplicity, they are usually provided in association with the respective containers 12a, 12b in order to be able to be managed by means of the electronic control unit PLC. Similarly, the various sensors for measuring the lighting or the ambient brightness, for measuring the amount of oxygen in the nutritional fluid, and the sensor means for sensing the temperature and the humidity inside the containers 12a and 12b (not shown in Figures 9 and 10) can be connected to the electronic control unit PLC by means of respective conductor cables.
The steps of the operation of the system 10 according to this embodiment are substantially the same as for the previous embodiment.
Of course, any change and modification within the reach of the technician skilled in the art can be brought to the system of the invention, while still remaining within the scope of the accompanying claims.

## Claims

1. Aeroponic system for the modular cultivation and transportation of plant products, comprising:
- a plurality of substantially closed containers (12a, 12b), having an upper cover (16) in which seats (18) are formed for removably receiving pots (20) adapted to contain and support a respective horticultural product (14), which pots (20) have openings for communicating with the inside of the respective container (12a, 12b),
- a first hydraulic line (22, 22a) connected to said containers (12a, 12b) and connected to the delivery side of a feed pump (24) for feeding a nutritional fluid containing water and nutrients inside each container (12a, 12b),
- an auxiliary hydraulic line (26) separated from said first hydraulic line, said auxiliary hydraulic line (26) being connected to the suction side of said pump (24) and to the bottom of one container (12a), wherein said plurality of containers (12a, 12b) comprises a main container (12a) and a series of secondary containers (12b), the bottom of all said secondary containers (12b) being arranged at a higher level with respect to the bottom of the main container (12a), said auxiliary hydraulic line (26) being connected only to the bottom of the main container (12a), and a second hydraulic line (44, 44a) connecting with each other the bottom of all said containers (12a, 12b).

2. Aeroponic system according to claim 1, **characterized in that** said secondary containers (12b) are raised by means of spacer elements (13) arranged beneath support feet thereof.

3. Aeroponic system according to claim 2, **characterized in that** said spacer elements (13) consist of height-adjustable screw support members, preferably incorporated in the support feet of the secondary containers (12b).

4. Aeroponic system according to any one of claims 1 to 3, **characterized in that** a filter element (30) is arranged between the delivery side of said pump (24) and said first hydraulic line (22, 22a).

5. Aeroponic system according to any one of claims 1 to 4, **characterized in that** a first on-off valve (42, 43) is interposed between the delivery side of said pump (24) and said first hydraulic line (22, 22a).

6. Aeroponic system according to any one of claims 1 to 5, **characterized in that** it comprises a hydraulic washing circuit that includes a third hydraulic line (54, 54a) connected to each of said containers (12a, 12b) and selectively connectable to the delivery side of said pump (24).

7. Aeroponic system according to claim 6, **characterized in that** a second on-off valve (58, 59) is interposed between the delivery side of said pump (24) and said third hydraulic line (54, 54a).

8. Aeroponic system according to any one of Claims 1 to 7, **characterized in that** it comprises ozonization means (50) to ozonize said nutritional fluid, which means are connected to the inside of the main container (12a).

9. Aeroponic system according to any one of Claims 1 to 8, **characterized in that** it comprises artificial lighting means (52) arranged above said vegetable products (14) and associated with each of said containers (12a, 12b).

10. Aeroponic system according to any one of Claims 1 to 9, **characterized in that** said first and second on-off valves (42, 43; 58, 59) consist of solenoid valves, and **in that** the operation of said pump (24) and/or of said first and second on-off valve (42, 43; 58, 59) and/or of said ozonization means (50) and/or of said artificial lighting means (52) is managed automatically by electronic control means (PLC).

11. Aeroponic system according to any one of Claims 1 to 10, **characterized in that** it comprises sensor means for sensing the temperature and/or the humidity placed inside said containers (12a, 12b), and/or means for measuring the amount of oxygen in the nutritional fluid, and/or means for measuring illumination, which sensor means are connected to said electronic control means (PLC) to control the optimal conditions of cultivation of said vegetable products (14) by controlling the temperature and/or humidity conditions, and/or the amount of oxygen in the nutritional fluid, and/or the amount of light supplied to the plant products (14).

12. Aeroponic system according to any one of Claims 1 to 11, **characterized in that** said containers (12a, 12b) are provided with support uprights (15) for supporting at least another secondary container (12b) in an overhead position with respect to each lower container (12a, 12b).

13. Aeroponic system according to claim 12, **characterized in that** a first additional hydraulic nebulization line (22a) for feeding the nutritional fluid and connected to said pump (24), and a second additional hydraulic draining line (44a) for connecting the bottom of the overhead secondary containers (12b), are associated with said overhead secondary containers (12b).

14. Aeroponic system according to claim 13, **characterized in that** an additional hydraulic washing circuit including a third additional hydraulic line (44a) connected to each of said overhead containers (12b) and selectively connectable with the delivery side of said pump (24), is associated with said overhead secondary containers (12b).

15. Aeroponic system according to claim 13, **characterized in that** it comprises a first additional on-off valve (43) interposed between the delivery side of said pump (24) and said first additional hydraulic line (22a), and a second additional on-off valve (59) interposed between the delivery side of said pump (24) and said third additional hydraulic line (54a), said first additional on-off valve (43) and said second additional on-off valve (59) consisting of solenoid valves, and their operation being managed by said electronic control means (PLC).

16. Aeroponic system according to any one of Claims 1 to 15, **characterized in that** said pots (20), once removed from the respective seat (18) of an upper cover (16) of a container (12a, 12b), can be inserted in a respective cup-shaped support (21), and **in that** said pot (20) and said cup-shaped support (21) have mutual snap engagement means.

## Patentansprüche

1. Aeroponisches System für die modulare Kultivierung und den Transport von Pflanzenprodukten, umfassend:
- eine Vielzahl von im Wesentlichen geschlossenen Behältern (12a, 12b), die eine obere Abdeckung (16) aufweisen, in der Sitze (18) zur abnehmbaren Aufnahme von Töpfen (20) ausgebildet sind, die zur Aufnahme und zum Tragen eines jeweiligen Gartenbauprodukts (14) ausgelegt sind, wobei die Töpfe (20) Öffnungen zur Verbindung mit dem Inneren des jeweiligen Behälters (12a, 12b) aufweisen,
- eine erste Hydraulikleitung (22, 22a), die mit den Behältern (12a, 12b) verbunden ist und an die Druckseite einer Förderpumpe (24) angeschlossen ist, um eine Nährflüssigkeit, die Wasser und Nährstoffe enthält, in das Innere jedes Behälters (12a, 12b) zu fördern,
- eine Hilfshydraulikleitung (26), die von der ersten Hydraulikleitung getrennt ist, wobei die Hilfshydraulikleitung (26) mit der Saugseite der Pumpe (24) und mit dem Boden eines Behälters (12a) verbunden ist,
wobei die Vielzahl von Behältern (12a, 12b) einen Hauptbehälter (12a) und eine Reihe von Zweitbehältern (12b) umfasst, wobei der Boden aller Zweitbehälter (12b) auf einem höheren Niveau in Bezug auf den Boden des Hauptbehälters (12a) angeordnet ist, wobei die Hilfshydraulikleitung (26) nur mit dem Boden des Hauptbehälters (12a) verbunden ist, und eine zweite Hydraulikleitung (44, 44a) den Boden aller Behälter (12a, 12b) miteinander verbindet.

2. Aeroponisches System nach Anspruch 1, **dadurch gekennzeichnet, dass** die Zweitbehälter (12b) mittels Abstandshalterelementen (13), die unter deren Stützfüßen angeordnet sind, angehoben werden.

3. Aeroponisches System nach Anspruch 2, **dadurch gekennzeichnet, dass** die Abstandshalterelemente (13) aus höhenverstellbaren Schraubstützelementen bestehen, die vorzugsweise in die Stützfüße der Zweitbehälter (12b) eingebaut sind.

4. Aeroponisches System nach einem der Ansprüche 1 bis 3, **dadurch gekennzeichnet, dass** zwischen der Druckseite der Pumpe (24) und der ersten Hydraulikleitung (22, 22a) ein Filterelement (30) angeordnet ist.

5. Aeroponisches System nach einem der Ansprüche 1 bis 4, **dadurch gekennzeichnet, dass** zwischen der Druckseite der Pumpe (24) und der ersten Hydraulikleitung (22, 22a) ein erstes Ein-Aus-Ventil (42, 43) zwischengeschaltet ist.

6. Aeroponisches System nach einem der Ansprüche 1 bis 5, **dadurch gekennzeichnet, dass** es einen hydraulischen Waschkreislauf umfasst, der eine dritte Hydraulikleitung (54, 54a) enthält, die mit jedem der Behälter (12a, 12b) verbunden ist und selektiv mit der Druckseite der Pumpe (24) verbunden werden kann.

7. Aeroponisches System nach Anspruch 6, **dadurch gekennzeichnet, dass** ein zweites Ein-Aus-Ventil (58, 59) zwischen der Druckseite der Pumpe (24) und der dritten Hydraulikleitung (54, 54a) angeordnet ist.

8. Aeroponisches System nach einem der Ansprüche 1 bis 7, **dadurch gekennzeichnet, dass** es Ozonisierungsmittel (50) zum Ozonisieren der Nährflüssigkeit umfasst, die mit dem Inneren des Hauptbehälters (12a) verbunden sind.

9. Aeroponisches System nach einem der Ansprüche 1 bis 8, **dadurch gekennzeichnet, dass** es künstliche Beleuchtungsmittel (52) umfasst, die über den Pflanzenprodukten (14) angeordnet und mit jedem der Behälter (12a, 12b) verbunden sind.

10. Aeroponisches System nach einem der Ansprüche 1 bis 9, **dadurch gekennzeichnet, dass** das erste und das zweite Ein-Aus-Ventil (42, 43; 58, 59) aus Magnetventilen bestehen, und dass der Betrieb der Pumpe (24) und/oder des ersten und des zweiten Ein-Aus-Ventils (42, 43; 58, 59) und/oder der Ozonisierungseinrichtung (50) und/oder der künstlichen Beleuchtungsmittel (52) automatisch durch elektronische Steuermittel (PLC) gesteuert wird.

11. Aeroponisches System nach einem der Ansprüche 1 bis 10, **dadurch gekennzeichnet, dass** es Sensormittel zum Erfassen der Temperatur und/oder der Feuchtigkeit, die in den Behältern (12a, 12b) angeordnet sind, und/oder Mittel zum Messen der Sauerstoffmenge in der Nährflüssigkeit und/oder Mittel zum Messen der Beleuchtung umfasst, wobei die Sensormittel mit den elektronischen Steuermitteln (PLC) verbunden sind, um die optimalen Bedingungen für die Kultivierung der Pflanzenprodukte (14) zu steuern, indem die Temperatur- und/oder Feuchtigkeitsbedingungen und/oder die Sauerstoffmenge in der Nährflüssigkeit und/oder die den Pflanzenprodukten (14) zugeführte Lichtmenge gesteuert werden.

12. Aeroponisches System nach einem der Ansprüche 1 bis 11, **dadurch gekennzeichnet, dass** die Behälter (12a, 12b) mit Stützpfosten (15) versehen sind, um mindestens einen weiteren Zweitbehälter (12b) in einer Überkopfposition in Bezug auf jeden unteren Behälter (12a, 12b) zu tragen.

13. Aeroponisches System nach Anspruch 12, **dadurch gekennzeichnet, dass** eine erste zusätzliche hydraulische Vernebelungsleitung (22a) zum Zuführen der Nährflüssigkeit, die mit der Pumpe (24) verbunden ist, und eine zweite zusätzliche hydraulische Entleerungsleitung (44a) zum Verbinden des Bodens der oben liegenden Zweitbehälter (12b), mit den oben liegenden Zweitbehältern (12b) verbunden sind.

14. Aeroponisches System nach Anspruch 13, **dadurch gekennzeichnet, dass** ein zusätzlicher hydraulischer Waschkreislauf, der eine dritte zusätzliche hydraulische Leitung (44a) enthält, welche mit jedem der obenliegenden Behälter (12b) verbunden ist und selektiv mit der Druckseite der Pumpe (24) verbunden werden kann, mit den obenliegenden Zweitbehältern (12b) verbunden ist.

15. Aeroponisches System nach Anspruch 13, **dadurch gekennzeichnet, dass** es ein erstes zusätzliches Ein-Aus-Ventil (43), das zwischen der Druckseite der Pumpe (24) und der ersten zusätzlichen Hydraulikleitung (22a) angeordnet ist, und ein zweites zusätzliches Ein-Aus-Ventil (59), das zwischen der Druckseite der Pumpe (24) und der dritten zusätzlichen Hydraulikleitung (54a) angeordnet ist, umfasst, wobei das erste zusätzliche Ein-Aus-Ventil (43) und das zweite zusätzliche Ein-Aus-Ventil (59) aus Magnetventilen bestehen und ihr Betrieb durch die elektronische Steuereinrichtung (PLC) gesteuert wird.

16. Aeroponisches System nach einem der Ansprüche 1 bis 15, **dadurch gekennzeichnet, dass** die Töpfe (20), sobald sie aus dem jeweiligen Sitz (18) einer oberen Abdeckung (16) eines Behälters (12a, 12b) entfernt sind, in einen jeweiligen becherförmigen Träger (21) eingesetzt werden können, und dass der Topf (20) und der becherförmige Träger (21) gegenseitige Einrasteingriffsmittel aufweisen.

## Revendications

1. Système aéroponique pour la culture modulaire et le transport de produits végétaux, comprenant:
- une pluralité de récipients sensiblement fermés (12a, 12b), ayant un couvercle supérieur (16) dans lequel des sièges (18) sont formés pour recevoir de manière amovible des pots (20) adaptés pour contenir et supporter un produit horticole respectif (14), lesquels pots (20) ont des ouvertures pour communiquer avec l'intérieur du récipient respectif (12a, 12b),
- une première conduite hydraulique (22, 22a) connectée auxdits récipients (12a, 12b) et connectée au côté refoulement d'une pompe d'alimentation (24) pour alimenter un fluide nutritionnel contenant de l'eau et des nutriments à l'intérieur de chaque récipient (12a, 12b),
- une conduite hydraulique auxiliaire (26) séparée de ladite première conduite hydraulique, ladite conduite hydraulique auxiliaire (26) étant reliée au côté aspiration de ladite pompe (24) et au fond d'un récipient (12a), ladite pluralité de récipients (12a, 12b) comprenant un récipient principal (12a) et une série de récipients secondaires (12b), le fond de tous lesdits récipients secondaires (12b) étant disposé à un niveau supérieur par rapport au fond du récipient (12a), ladite conduite hydraulique auxiliaire (26) étant reliée uniquement au fond du récipient principal (12a), et une deuxième conduite hydraulique (44, 44a) reliant entre eux le fond de tous lesdits récipients (12a, 12b).

2. Système aéroponique selon la revendication 1, **caractérisé en ce que** lesdits récipients secondaires (12b) sont surélevés au moyen d'éléments d'espacement (13) disposés sous leurs pieds de support.

3. Système aéroponique selon la revendication 2, **caractérisé en ce que** lesdits éléments d'espacement (13) sont constitués par des organes de support à vis réglables en hauteur, de préférence incorporés dans les pieds de support des récipients secondaires (12b).

4. Système aéroponique selon l'une quelconque des revendications 1 à 3, **caractérisé en ce qu'**un élément filtrant (30) est agencé entre le côté refoulement de ladite pompe (24) et ladite première conduite hydraulique (22, 22a).

5. Système aéroponique selon l'une quelconque des revendications 1 à 4, **caractérisé en ce qu'**une première vanne tout ou rien (42, 43) est interposée entre le côté refoulement de ladite pompe (24) et ladite première conduite hydraulique (22, 22a).

6. Système aéroponique selon l'une quelconque des revendications 1 à 5, **caractérisé en ce qu'**il comprend un circuit hydraulique de lavage qui comprend une troisième conduite hydraulique (54, 54a) reliée à chacun desdits récipients (12a, 12b) et sélectivement connectable au côté refoulement de ladite pompe (24).

7. Système aéroponique selon la revendication 6, **caractérisé en ce qu'**une deuxième vanne tout ou rien (58, 59) est interposée entre le côté refoulement de ladite pompe (24) et ladite troisième conduite hydraulique (54, 54a) .

8. Système aéroponique selon l'une quelconque des revendications 1 à 7, **caractérisé en ce qu'**il comprend des moyens d'ozonisation (50) pour ozoner ledit fluide nutritionnel, ces moyens étant reliés à l'intérieur du récipient principal (12a).

9. Système aéroponique selon l'une quelconque des revendications 1 à 8, **caractérisé en ce qu'**il comprend des moyens d'éclairage artificiel (52) disposés au-dessus desdits produits végétaux (14) et associés à chacun desdits récipients (12a, 12b).

10. Système aéroponique selon l'une quelconque des revendications 1 à 9, **caractérisé en ce que** lesdites première et deuxième vannes tout ou rien (42, 43 ; 58, 59) sont constituées d'électrovannes, et **en ce que** le fonctionnement de ladite pompe (24) et / ou desdites première et deuxième vannes tout ou rien (42, 43 ; 58, 59) et / ou desdits moyens d'ozonisation (50) et / ou desdits moyens d'éclairage artificiel (52) est géré automatiquement par des moyens électroniques de commande (PLC).

11. Système aéroponique selon l'une quelconque des revendications 1 à 10, **caractérisé en ce qu'**il comprend des moyens de détection de la température et / ou de l'humidité placés à l'intérieur desdits récipients (12a, 12b), et / ou des moyens de mesure de la quantité d'oxygène dans le fluide nutritionnel, et / ou des moyens pour mesurer l'éclairage, lesquels moyens de détection sont connectés auxdits moyens électroniques de commande (PLC) pour commander les conditions optimales de culture desdits produits végétaux (14) en commandant les conditions de température et / ou d'humidité, et / ou la quantité d'oxygène dans le fluide nutritionnel, et / ou la quantité de lumière fournie aux produits végétaux (14) .

12. Système aéroponique selon l'une quelconque des revendications 1 à 11, **caractérisé en ce que** lesdits récipients (12a, 12b) sont pourvus de montants de support (15) pour supporter au moins un autre récipient secondaire (12b) en une position supérieure par rapport à chaque récipient inférieur (12a, 12b).

13. Système aéroponique selon la revendication 12, **caractérisé en ce qu'**une première conduite de nébulisation hydraulique (22a) supplémentaire pour alimenter le fluide nutritionnel et reliée à ladite pompe (24), et une deuxième conduite de drainage hydraulique (44a) supplémentaire pour relier le fond des récipients secondaires supérieurs (12b) sont associés auxdits récipients secondaires supérieurs (12b).

14. Système aéroponique selon la revendication 13, **caractérisé en ce qu'**un circuit hydraulique supplémentaire de lavage comprenant une troisième conduite hydraulique (44a) supplémentaire reliée à chacun desdits récipients supérieurs (12b) et connectable sélectivement avec le côté refoulement de ladite pompe (24), est associé auxdits récipients secondaires supérieurs (12b).

15. Système aéroponique selon la revendication 13, **caractérisé en ce qu'**il comprend une première vanne tout ou rien (43) supplémentaire interposée entre le côté refoulement de ladite pompe (24) et ladite première conduite hydraulique (22a) supplémentaire, et une deuxième vanne tout ou rien (59) supplémentaire interposée entre le côté refoulement de ladite pompe (24) et ladite troisième conduite hydraulique (54a) supplémentaire, ladite première vanne tout ou rien (43) supplémentaire et ladite deuxième vanne tout ou rien (59) supplémentaire consistant en des électrovannes, et leur fonctionnement étant géré par lesdits moyens électroniques de commande (PLC).

16. Système aéroponique selon l'une quelconque des revendications 1 à 15, **caractérisé en ce que** lesdits pots (20), une fois retirés du siège respectif (18) d'un couvercle supérieur (16) d'un récipient (12a, 12b), peuvent être insérés dans un support en forme de coupe (21) respectif, et **en ce que** ledit pot (20) et ledit support en forme de coupe (21) ont des moyens mutuels d'engagement à encliquetage.
